Europäisches Patentamt

European Patent Office

Office européen des brevets

(19)

(11) Veröffentlichungsnummer: **0 242 677**
**B1**

(12) **EUROPÄISCHE PATENTSCHRIFT**

(45) Veröffentlichungstag der Patentschrift:
27.12.90

(21) Anmeldenummer: 87105014.2

(22) Anmeldetag: 04.04.87

(51) Int. Cl.⁵: **C08F 220/14,** C08F 212/12,
C08F 6/00
// (C08F220/14, 212:12,
220:12),(C08F212/12, 220:14,
220:12)

(54) Verfahren zur Herstellung wärmeformbeständiger Formmassen.

(30) Priorität: 16.04.86 DE 3612773

(43) Veröffentlichungstag der Anmeldung:
28.10.87 Patentblatt 87/44

(45) Bekanntmachung des Hinweises auf die Patenterteilung:
27.12.90 Patentblatt 90/52

(84) Benannte Vertragsstaaten:
DE ES FR GB IT NL

(56) Entgegenhaltungen:
DE-A- 1 595 024

Die Akte enthält technische Angaben, die nach dem
Eingang der Anmeldung eingereicht wurden und die
nicht in dieser Patentschrift enthalten sind.

(73) Patentinhaber: Röhm GmbH, Kirschenallee
Postfach 4242, D-6100 Darmstadt 1(DE)

(72) Erfinder: Siol, Werner, Dr., Goerdelerweg 34,
D-6100 Darmstadt(DE)
Erfinder: Terbrack, Ulrich, Berliner Strasse 3,
D-6107 Reinheim 2(DE)
Erfinder: Wenzel, Franz, Dr., Zeyherweg 5,
D-6100 Darmstadt(DE)
Erfinder: Wunderlich, Winfried, Dr., Spessartring 11,
D-6101 Rossdorf 1(DE)

## Beschreibung

### Gebiet der Erfindung

Die Erfindung betrifft die Herstellung von Methylmethacrylat-α-Methylstyrol-Copolymerisaten, die als Formmassen mit erhöhter Glastemperatur ausgezeichnet sind.

### Stand der Technik

Methylmethacrylat -α-Methylstyrol-Copolymerisate haben Interesse gefunden für die Herstellung kochfester oder thermisch bis etwa 110 Grad Celsius beanspruchbarer Formteile. Die Copolymerisate sind jedoch wegen ihrer unbefriedigenden Thermostabilität schwer zu verarbeiten, da sie bei den erforderlichen Verarbeitungstemperaturen eine merkliche Depolymerisation zeigen. Auch die Herstellung der Copolymerisate durch Substanz- oder auch Perlpolymerisation ist infolge der langsam ablaufenden Polymerisation schwierig.

Eine Verbesserung der Thermostabilität bringt die Mitverwendung weiterer copolymerisierbarer Vinylverbindungen, wie Styrol oder Acrylsäureester oder N-Vinyl-bernsteinsäureimid wie in DE-C 1 210 189 beschrieben ist.

Nach der DE-A 1 595 024 läßt sich die Herstellung verbessern. Hiernach wird eine Formmasse, bestehend aus mehr als 55 Gewichtsteilen Methylmethacrylat, 5 bis 40 Gewichtsteilen α-(-Methylstyrol und 1 bis 10 Gewichtsteilen eines Alkylacrylats, durch Emulsionspolymerisation bei 50 bis 140 Grad Celsius in relativ kurzen Reaktionszeiten erhalten. Aus den Angaben dieser Offenlegungsschrift bezüglich Polymerisatgehalt und Aufarbeitung der Emulsionspolymerisate ersieht man, daß das dort offenbarte Verfahren nicht wirtschaftlich ist. Mit einem Wassergehalt der Emulsionen von rund 75 Gew.-% muß zu dessen thermischer Entfernung eine hohe Energiemenge aufgewendet werden. Zur möglichst vollständigen Entfernung von Hilfsstoffen, die sonst zur Trübung der Formmassen führen, werden noch mehrere Waschvorgänge mit niederen Alkoholen und Wasser angeschlossen.

### Aufgabe und Lösung

Der Erfindung liegt die Aufgabe zugrunde, ein technisch und wirtschaftlich verbessertes Verfahren zur Herstellung thermoplastisch verarbeitbarer Formmassen auf Methylmethacrylat-α-Methylstyrol-Copolymerisatbasis mit hoher Wärmeformbeständigkeit und hoher Thermostabilität zur Verfügung zu stellen.

Zur Lösung der Aufgabe wird in der Erfindung vorgeschlagen, die Herstellung von thermisch stabilen Formmassen durch Emulsionspolymerisation eines Monomerengemisches aus mehr als 30 Gewichtsteilen Methylmethacrylat, 10 bis 60 Gewichtsteilen α-Methylstyrol und 0 bis 20, vorzugsweise 2 bis 5 Gewichtsteilen eines Alkylacrylates mit 1 bis 4 C-Atomen im Alkohol des Esterrestes und/oder Styrol und gegebenenfalls eines weiteren Monomeren in Mengen von 0 bis 10 Gew.-%, vorzugsweise 1 bis 10 Gew.-%. in einem wäßrigen Medium auszuführen, wobei der Wasseranteil, bezogen auf das Gesamtgewicht von Monomer und Wasser kleiner als 70 Gew.-%, und die Emulgatormenge weniger 2, bevorzugt weniger als 0,5 Gew.-%, bezogen auf die verwendete Wassermenge, ist, und die Isolierung des zur thermoplastischen Verarbeitung fertigen Polymerisates praktisch in einem Schritt durch Sprühtrocknung oder bevorzugt durch Extruderabquetschung oder Gefrierkoagulation durchzuführen.

Das Emulsionspolymerisat wird vorteilhaft in Gegenwart von Schwefelreglern hergestellt. Nach dem erfindungsgemäßen Verfahren erhält man glasklare, farblose Polymerisate, die entsprechend ihrer Zusammensetzung, d.h. insbesondere durch ihren Anteil an α-Methylstyrol, hohe Wärmeformbeständigkeiten, gemessen als Vicaterweichungstemperaturen nach DIN 53 460, von etwa 125 bis etwa 150 Grad Celsius haben, und die infolge ihrer hohen thermischen Stabilität gut thermoplastisch, z.B. im Spritzgußverfahren zur Herstellung von komplizierten Formteilen, verarbeitbar sind. Insbesondere zeichnen sich die nach dem erfindungsgemäßen Verfahren hergestellten Formmassen durch einen TD-Wert von > 270 Grad Celsius, bevorzugt durch einen TD-Wert > 290 Grad Celsius aus. Als TD-Wert ist dabei diejenige Temperatur (gemessen in Grad Celsius) zu verstehen, bei der die Polymerprobe während einer dynamisch-gravimetrischen Messung im Vakuum mit einer Aufheizgeschwindigkeit von 5 Grad Celsius/Minute 2 % Gewichtsverlust zeigt. Diese Kombination von hoher Wärmeformbeständigkeit und hoher Thermostabilität (= Verarbeitungsstabilität) ergibt sich überraschenderweise durch die Kombination von

1.) der genannten Monomerenzusammensetzung,
2.) Emulsionspolymerisation im Bereich von 30 bis 150 Grad Celsius,
3.) Einstellung einer Dispersionsteilchengröße < 1 000 nm,
4.) Einsatz geringer Initiatormengen,
5.) Wahl eines bestimmten Initiator/Reglerverhältnisses,
6.) Einsatz geringer Emulgatormengen und
7.) Aufarbeitung unter Abtrennung der Wasserphase.

Der Restmonomerengehalt der Formmassen ist in der Regel < 2 %, bevorzugt < 0,5 %.

### Durchführung der Erfindung

Die Herstellung der Mischpolymerisate erfolgt in Anlehnung an an sich bekannte Ausführungsformen der Emulsionspolymerisation, wie sie u.a. in Methoden der organischen Chemie (Houben-Weyl), and XIV/1 (1961), Makromolekulare Stoffe, Seite 145 und Seiten 1048 bis 1053 und in Ullmanns Encyklopädie der technischen Chemie, 4. Auflage, Band 13, Seite 601, Band 15, Seite 191 und Band 19, Seite 132 ff., beschrieben sind.

Gemäß der Erfindung werden die monomeren Verbindungen, nämlich Methylmethacrylat, α-Methylstyrol und ein oder mehrere niedere Acrylester oder auch Styrol und gegebenenfalls weitere Monomere in untergeordneten Anteilen als Monomerengemisch in einem wäßrigen Medium bei Temperaturen von etwa 30 bis 150 Grad Celsius polymerisiert, wobei das Gewichtsverhältnis der Wassermenge zur Monomerenmenge 70 bis 30 zu 30 bis 70, bevorzugt 60 bis 40 zu 40 bis 60, betragen soll.

Als Polymerisationsinitiatoren werden beispielsweise wasserlösliche Peroxoverbindungen, wie Alkalipersulfat oder Wasserstoffperoxid, aber auch organische Peroxide oder Redoxsysteme, wie Natriumpyrosulfit/Kaliumpersulfat, verwendet. Die Initiatormenge liegt bei 0,0001 bis 1, vorzugsweise bei 0,001 bis 0,2, ganz besonders bevorzugt bei 0,002 bis 0,1 Gew.-%, bezogen auf die zu polymerisierende Monomermenge.

Besondere Bedeutung kommt der Dispersionsteilchengröße zu. Dabei sind besonders feinteilige Polymerdispersionen bevorzugt. Der Teilchendurchmesser soll in der Regel im Bereich von 40 bis 1 000 nm oder bevorzugt im Bereich von 40 bis 500 nm oder besonders bevorzugt im Bereich von 50 bis 300 nm liegen. Die Messung der Teilchengröße kann mit Hilfe der Elektronenmikroskopie oder auch mit der Ultrazentrifuge durchgeführt werden. Trotz dieser an sich geringen Teilchengröße soll der Emulgatorgehalt niedrig gehalten werden, d.h. < 2 Gew.-%, bezogen auf die Wasserphase, oder bevorzugt < 0,5 Gew.-%, bezogen auf die Wasserphase. Unter Zusatz von Kettenübertragungsreglern wird eine Lösungsviskosität $\eta$spez/C des Polymeren eingestellt, die im Bereich von 20 bis 200, insbesondere von 30 bis 150 ml/g, gemessen nach DIN 51 562 in Chloroform bei 20 Grad Celsius liegt. Als Kettenübertragungsregler sind beispielsweise halogenartige Verbindungen, bevorzugt jedoch Mercaptane zu nennen.

Als Schwefelregler, die sowohl für die Einstellung des Molekulargewichtes und damit der Viskosität und somit der Verarbeitung des Polymeren, als auch zur Erhöhung von dessen thermischer Stabilität, vorteilhaft bei der Polymerisation eingesetzt werden, dienen vor allem Alkylmercaptane, wie beispielsweise n-Butylmercaptan, tert.-Dodecylmercaptan oder Thioglykolsäureester, wie Thioglykolsäure-2-äthylhexylester, aber auch Thiophenol oder mehrfunktionelle Mercaptane mit 2 bis 6 SH-Gruppen. Die den Polymerisationsablauf beeinflussende Initiator-Regler-Kombination enthält die beiden Komponenten in einem Verhältnis von 1 zu 1 bis 1 zu 10 000, bevorzugt von 1 zu 5 bis 1 zu 200 Mol/Mol. Die zu verwendenden Emulgatoren werden in Mengen unter 2,0, besser unter 0,5, insbesondere in Mengen von 0,1 bis 0,3 Gew.-%, bezogen auf die Wasserphase, angewandt.

Wie weiter gefunden wurde, erhält man vor allem dann klare, hochwärmeformbeständige Polymerisate, wenn die Endpolymerisation, d.h. der Umsatz von 90 bis 100, insbesondere von 95 bis 100, besonders bevorzugt der Umsatz von 98 bis 100 %, durch gezielte Maßnahmen, gesteuert wird. Als eine Maßnahme erweist sich das Entgasen der Dispersion. Eine andere Möglichkeit stellt das Nachfüttern von Monomeren oder Monomermischungen dar, speziell solchen, die weniger $\alpha$-Methylstyrol enthalten als stöchiometrisch dem Gesamtpolymerisat entspricht.

Überraschenderweise erhält man auch klare Produkte, wenn man die Polymerisationstemperatur gegen Ende der Reaktion absenkt. Dies steht im Gegensatz zur üblicherweise durchgeführten Endpolymerisation bei erhöhter Temperatur.

Vorteilhaft erweist sich auch die Emulsionspolymerisation der Monomerenmischung in Gegenwart von geringen Mengen an Lösungsmitteln oder Zugabe von Lösungsmitteln bei der Endpolymerisation, wie beispielsweise n-Butylacetat in Mengen von etwa 5 Gew.-%, bezogen auf das Polymerisat. Besonders vorteilhaft erweist sich die Kombination von Absenkung der Polymerisationstemperatur am Ende und Polymerisation und Arbeiten in Gegenwart von geringen Mengen an Lösungsmittel.

Die Durchführung der Emulsionspolymerisation erfolgt bevorzugt unter Inertgas (Stickstoff, Argon etc.) oder in Abwesenheit einer Gasphase. Die Durchführung der Emulsionspolymerisation kann sowohl im Batch-Verfahren, z.B. im Zulaufverfahren, oder auch kontinuierlich vorgenommen werden. Bevorzugt ist das Batch-Verfahren, bei dem alle Monomeren, Regler, Hilfsstoffe etc. gemeinsam in einem Rührkessel vorgelegt werden. Besonders bevorzugt sind ganz allgemein solche Verfahren, bei denen dem Polymerisationsansatz bereits > 45 Gew.-%, bevorzugt > 90 Gew.-%, der Gesamtmonomeren zugesetzt wird, bevor 20 Gew.-% oder besonders bevorzugt 10 Gew.-% der Monomeren polymerisiert sind. Als kontinuierliche Verfahren kommen insbesondere der Rohrreaktor oder die Rührkesselkaskade in Frage. Wenn Zulaufverfahren überhaupt eingesetzt werden, ist darauf zu achten, daß mit den Monomeren möglichst wenige Inhibitoren, z.B. Luftsauerstoff, zudosiert werden. Es widerspricht der Erfindung, die Polymerisation unter Erhöhung der Initiatormenge durchzuführen. Es ist vielmehr dafür Sorge zu tragen, die Polymerisation mit der geringst möglichen Initiatormenge und damit dem niedrigst möglichen Initiator/Regler-Verhältnis durchzuführen.

Weiter wird erfindungsgemäß die Isolierung des Dispersionspolymerisates, damit die Abtrennung des Wassers und damit die Abtrennung von die Weiterverarbeitung des Polymerisates störenden Stoffen, durch moderne Dispersionsfeststoffabtrennverfahren, wie Sprühtrocknung, oder vorteilhaft Gefrierkoagulation oder insbesondere durch Extruderabquetschung (siehe hierzu auch DE-OS 29 17 321) erreicht. Mit diesen Methoden kann das Polymerisat mit deutlich niedrigerem Energieeinsatz und weniger Arbeitsschritten als nach dem Stand der Technik bekannt als wertvolles Zwischenprodukt erhalten werden. Es ist ein wesentlicher Punkt der Erfindung, daß bei Einhaltung der oben beschriebenen Verfahrensparameter überraschenderweise auf die bisher übliche umständliche Aufarbeitung und Produktreinigung verzichtet werden kann. Der nach dem erfindungsgemäßen Verfahren erhaltenen Formmasse können niedermolekulare und gegebenenfalls polymerisierte Stabilisierungsmittel, wie UV-Schutzmittel, Antioxidantien, sowie Entformungshilfsmittel und Gleitmittel etc. zugesetzt werden.

Die nach dem erfindungsgemäßen Verfahren hergestellten Formmassen sind thermoplastisch zwischen 180 und 300 Grad Celsius durch Extrusion, Spritzgießen, Pressen usw. zu Formkörpern, Platten oder Folien verarbeitbar.

Die Massen kommen insbesondere da zum Einsatz, wo hohe Wärmeformbeständigkeit, hohe Verarbeitungsstabilität, geringer Restmonomerengehalt und hohe Lichtdurchlässigkeit gleichermaßen gefordert sind. Ein bevorzugtes Anwendungsgebiet ist daher der Bereich höher beanspruchter Leuchtenabdeckungen, Autoscheinwerferabdeckungen, der gesamte Haushaltssektor inklusive wasserführender Sanitärobjekte. Die bereits gute mechanische Festigkeit kann durch Abmischen mit Schlagzähmodifizierungsmitteln verbessert werden, wobei in einer bevorzugten Ausführungsform der Schlagzähmodifier auch in Form eines Emulsionspolymerisats hergestellt wird und die modifizierte, wärmeformbeständige Formmasse durch Abmischen der wäßrigen Dispersion und nachfolgenden Abtrennung des Wassers hergestellt wird.

Beispiel 1

In einem Polymerisationsgefäß werden

2800 g destilliertes Wasser
20 g Natriumsalz einer Mischung aus Hexadecan- und Tetradecansulfonsäure
0,0025 g Eisen-II-sulfat
1360 g Methylmethacrylat
600 g 2-Methylstyrol
40 g Methylacrylat
6 g 2-Ethylhexylthioglykolat

emulgiert, anschließend 10 g Kaliumperoxodisulfat in 200 g Wasser zugesetzt, und dann unter Argon als Schutzgas auf 64 Grad Celsius erwärmt. Durch Zugabe von 2 g Natriumbisulfit wird die Polymerisation gestartet. Es wird ca. 1 Stunde bei ca. 65 Grad Celsius Innentemperatur gerührt.

Anschließend wird langsam gekühlt (Temperaturerniedrigung: ca. 5 Grad Celsius pro Stunde), gleichzeitig wird langsam eine Mischung aus

2 g Natriumbisulfit
15 g des oben genannten Emulgators und
200 g Wasser

zugesetzt.

Die erhaltene Dispersion wird anschließend bei -16 Grad Celsius eingefroren, anschließend aufgetaut, mit Wasser gewaschen und getrocknet.

Restmonomerengehalt im so gewonnenen Pulver: 0,05 Gew.-%. Das Polymere hat eine Lösungsviskosität von: $\eta$spec/C = 63 ml/g. An dem Pulver wird die Thermostabilität gemessen: TD = 292 Grad Celsius. Aus dem Pulver wird eine 3 mm dicke Pressplatte hergestellt, die eine VST = 138 Grad Celsius aufweist.

Beispiel 2

In einem 100 l Rührkessel werden unter Stickstoffatmosphäre

4500 g destilliertes Wasser
300 g Natriumsalz einer Mischung aus Hexadecan- und Tetradecansulfonsäure
100 g Kaliumperoxodisulfat
0,037 g Eisen-II-sulfat
20400 g Methylmethacrylat
9000 g α-Methylstyrol
600 g Methylacrylat
120 g 2-Ethylhexylthioglykolat

bei 65 Grad Celsius emulgiert.

Durch Zugabe von 30 g Natriumbisulfit, gelöst in 200 g Wasser, wird gestartet. Nach 2 Stunden wird eine Lösung von 25 g Natriumbisulfit und 200 g des oben genannten Emulgators zudosiert.

Wenn die Innentemperatur wieder auf 65 Grad Celsius gefallen ist, wird eine Emulsion aus 1500 g Butylacetat, 30 g des oben genannten Emulgators und 1500 g Wasser zugegeben, nach 15 Minuten wird eine Lösung aus 2 g Natriumbisulfit und 20 g des oben genannten Emulgators in 50 g Wasser zugesetzt und langsam auf 40 Grad Celsius abgekühlt. Man erhält eine Polymerdispersion mit einem Restmonomerengehalt von ca. 1,5%. Teilchengröße der Dispersion: 68 nm (Teilchendurchmesser). Ein Teil der Dispersion wird gemäß Beispiel 1 gefrierkoaguliert.

Das Polymere hat eine Lösungsviskosität von spec/C = 62 ml/g. Das durch Gefrierkoagulation erhaltene Pulver wird zu einer 3 mm dicken Platte verpresst:
VST = 133 Grad Celsius.

Beispiel 3

Die Gewinnung des Polymerisatfeststoffes aus der Dispersion gemäß Beispiel 2 erfolgt durch Koagulation, Entwässerung und Entgasung des Latex mit einem Schneckenextruder, wobei ein geschmolzener Strang des Polymerisates ausgetragen wird (zur Durchführung siehe DE-OS 29 17 321) man erhält ein farbloses, glasklares Granulat.

Das Granulat wird zu einer 2 mm dicken Platte extrudiert.
VST der Platte: 133 Grad Celsius
Restmonomere in der Platte: 0,34 Gew.-%

Beispiel 4

Aus dem gemäß Beispiel 3 erhaltenen Granulat wird ein 3 mm dicker Prüfkörper gespritzt. Messung der Wärmeformbeständigkeit ergibt: VST = 132 Grad Celsius, Restmonomerengehalt im gespritzten Formkörper: 0,5 Gew.-%.

Beispiel 5

In einem Polymerisationsgefäß werden

2500 g destilliertes Wasser
10 g Kaliumperoxodisulfat
2,5 g Natriumsalz einer Mischung aus Hexadecan- und Tetradecansulfonsäure
0,0025 g Eisen-II-sulfat
5 g Styrol
75 g α-Methylstyrol
170 g Methylmethacrylat
0,77 g 2-Ethylhexylthioglykolat

emulgiert und unter Argon als Schutzgas auf 65 Grad C erwärmt. Durch Zugabe von 0,5 g Natriumbisulfit wird die Polymerisation gestartet und eine Stunde geführt. Nach einer Stunde wird eine Mischung aus 45 g Styrol, 675 g α-Methylstyrol, 1530 g Methylmethacrylat, 6,93 g 2-Ethylhexylthioglykolat zugegeben und anschließend erfolgt die Zugabe von 0,5 g Natriumbisulfit. Nach 8 Stunden wird die Umsetzung durch Abkühlung beendet.
Ein Teil der erhaltenen Dispersion wird dann bei minus 16 Grad C eingefroren, anschließend aufgetaut, mit Wasser gewaschen und getrocknet. Das Polymere hat eine Lösungsviskosität, $\eta_{spec/c}$, von 92 ml/g. An dem Pulver wird die Thermostabilität, $T_D$, gemessen: = 288 Grad C. Aus dem Pulver wird eine 3 mm dicke Preßplatte hergestellt, die eine VST von 134 Grad C aufweist.
Ein Teil der erhaltenen Dispersion wird anschließend in einem Trockenturm sprühgetrocknet. Aus dem Pulver wird eine 3 mm dicke Preßplatte hergestellt, die eine VST von 131 Grad C aufweist.

**Patentansprüche**

1. Verfahren zur Herstellung von wärmeformbeständigen Formmassen durch Mischpolymerisation von Methylmethacrylat, α-Methylstyrol, niederen Acrylestern und/oder Styrol in Emulsion in Gegenwart von radikalischen Polymerisationsinitiatoren und Mercaptanen als Reglern bei einem Initiator-Regler-Verhältnis von 1 zu 1 bis 1 zu 10 000 Mol/Mol und einer Initiatormenge von 0,0001 bis 1 Gew.-% bezogen auf die Monomeren, bei 30 bis 150 Grad°C, dadurch gekennzeichnet, daß die Emulsionspolymerisation mit einem Monomerengemisch aus mehr als 30 Gewichtsteilen Methylmethacrylat, 10–60 Gewichtsteilen α-Methylstyrol und 0 bis 20 Gewichtsteilen eines Alkylacrylates mit 1 bis 4 Kohlenstoffatomen im Alkohol des Esterrests und/oder Styrol, und gegebenenfalls eines weiteren Monomeren in Mengen von 0 bis 10 Gew.-%, in einem wäßrigen Medium durchgeführt wird, wobei der Wasseranteil, bezogen auf das Gesamtgewicht von Monomeren und Wasser, kleiner als 70 Gew.-% mit einem Emulgatoranteil von 2 Gew.-%, bezogen auf die verwendete Wassermenge, beträgt, die Teilchengröße des Emulsionspolymerisates im Bereich von 40 bis 1 000 nm (Teilchendurchmesser) liegt, und das Polymerisat anschließend durch Sprühtrocknung Gefrierkoagulation oder Extruderabquetschung aus der Dispersion isoliert wird.

2. Verfahren zur Herstellung von wärmeformbeständiger Formmasse gemäß Anspruch 1, dadurch gekennzeichnet, daß die Teilchengröße der Emulsionspolymerisaten im Bereich von 40 bis 500 nm (Teilchendurchmesser) liegt.

3. Verfahren zur Herstellung von wärmeformbeständiger Formmasse gemäß den Ansprüchen 1 und 2, dadurch gekennzeichnet, daß die Teilchengröße der Emulsionspolymerisate im Bereich von 50 bis 300 nm (Teilchendurchmesser) liegt.

4. Verfahren gemäß Anspruch 1, dadurch gekennzeichnet, daß die Endpolymerisation, d.h. der Umsatz von 90 bis 100%, durch besondere Maßnahmen, wie Absenken der Polymerisationstemperatur und/oder Nachfüttern von einer gegenüber der Bruttozusammensetzung des Polymerisats an α-Methylstyrol um wenigstens 30% ärmeren Monomermischung und/oder Zugabe von Lösungsmitteln in Mengen von etwa 5 Gew.-%, bezogen auf das Polymerisat, bzw. Abstoppen der Polymerisation und Entgasen ausgeführt wird.

5. Verfahren gemäß den Ansprüchen 1 bis 4, dadurch gekennzeichnet, daß die Isolierung des Polymerisats durch Extruderabquetschung erfolgt.

6. Verfahren gemäß den Ansprüchen 1 bis 4, dadurch gekennzeichnet, daß die Isolierung des Polymerisats durch Gefrierkoagulation erfolgt.

**Claims**

1. Process for preparing thermally non-deformable moulding compositions by the copolymerisation of methylmethacrylate, α-methylstyrene, lower acrylic esters and/or styrene in emulsion in the presence of radical polymerisation initiators and mercaptans as regulators, with a ratio of initiator to regulator of from 1:1 to 1:10 000 mol/mol and a quantity of initiator ranging from 0.0001 to 1% by weight, based on the monomers, at 30 to 150°C, characterised in that the emulsion polymerisation is carried out with a monomer mixture consisting of more than 30 parts by weight of methylmethacrylate, 10 to 60 parts by weight of α-methylstyrene and 0 to 20 parts by weight of an alkylacrylate having 1 to 4 carbon atoms in the alcohol of the ester radical and/or the styrene, and optionally another monomer in amounts of from 0 to 10% by weight, in an aqueous medium, the proportion of water, based on the total weight of monomers and water, being less than 70% by weight with a proportion of emulsifier of < 2% by weight, based on the quantity of water used, the particle size of the emulsion polymer being in the range from 40 to 1000 nm (particle diameter), and the polymer subsequently being isolated from the dispersion by spray drying, freeze-coagulation or pressing out through an extruder.

2. Process for producing a thermally non-deformable moulding composition according to claim 1, characterised in that the particle size of the emulsion polymers is in the range from 40 to 500 nm (particle diameter).

3. Process for preparing thermally non-deformable moulding composition according to claims 1 and 2, characterised in that the particle size of the emulsion polymers is in the range from 50 to 300 nm (particle diameter).

4. Process according to claim 1, characterised in that the final polymerisation, i.e. the conversion of 90 to 100%, is carried out by special measures such as lowering the temperature of polymerisation and/or adding a monomer mixture which is at least 30% lower in α-methylstyrene than the crude composition of the polymer, and/or by adding solvents in amounts of about 5% by weight, based on the polymer, or by stopping polymerisation and removing the gases.

5. Process according to claims 1 to 4, characterised in that the polymer is isolated by pressing out through an extruder.

6. Process according to claims 1 to 4, characterised in that the polymer is isolated by freeze-coagulation.

## Revendications

1. Procédé de préparation de masses à mouler résistant à la chaleur par copolymérisation de méthacrylate de méthyle, d'α-méthylstyrène, d'esters acryliques inférieurs et/ou de styrène, en émulsion en présence d'amorceurs de polymérisation radicalaires et de mercaptans en tant que régulateurs, avec un rapport amorceur/régulateur de 1:1 é 1: 10 000 moles/moles et une quantité initiateur de 0,0001 à 1% en poids par rapport aux monomères, à 30–150°, caractérisé en ce que la polymérisation en émulsion est effectuée en milieu aqueux avec un mélange des monomères contenant plus de 30 parties en poids de méthacrylate de méthyle, 10 à 60 parties en poids d'α-méthylstyrène et 0 à 20 parties en poids d'un acrylate d'alkyle ayant de 1 à 4 atomes de carbone dans l'alcool du reste ester et/ou de styrène, et éventuellement d'un autre monomère à raison de 0 à 10% en poids, où la partie aqueuse représente, par rapport au poids total des monomères et de l'eau, moins de 70% en poids avec une proportion d'émulsifiant de moins de 2% en poids par rapport à la quantité d'eau utilisée, la granulométrie du polymère en émulsion est comprise entre 40 et 1 000 nm (diamètre des particules), et le polymère est isolé ensuite de la dispersion par séchage par pulvérisation, coagulation par congélation ou expression à l'extrudeuse.

2. Procédé de préparation de masses à mouler résistant à la chaleur selon la revendication 1, caractérisé en ce que la granulométrie du polymère en émulsion est comprise entre 40 et 500 nm (diamètre des particules).

3. Procédé de préparation de masse à mouler de résistant à la chaleur selon la revendication 1 ou 2, caractérisé en ce que la granulométrie du polymère en émulsion est comprise entre 50 et 300 nm (diamètre des particules).

4. Procédé selon la revendication 1, caractérisé en ce que la polymérisation finale, c'est-à-dire un degré de transformation de 90 à 100%, est mise en œuvre dans des conditions particulières comme abaissement de la température de réaction et/ou appoint d'un mélange de monomères plus pauvre en α-

méthylstyrène d'au moins 30% que la composition globale du polymère et/ou addition de solvants en quantités d'environ 5% en poids par rapport au polymère, ou arrêt de la polymérisation et dégazage.

5. Procédé selon l'une quelconque des revendications 1 à 4, caractérisé en ce que l'isolement du polymère est effectué par expression à l'extrudeuse.

6. Procédé selon l'une quelconque des revendications 1 à 4, caractérisé en ce que l'isolement du polymère est effectué par coagulation par congélation.